# EUROPEAN PATENT APPLICATION

(11) **EP 4 129 077 A1**
(43) Date of publication of application: **08.02.2023**
(21) Application number: 21776344.0
(22) Date of filing: 24.03.2021
(51) Int. Cl.: A23J 3/14, A23J 3/16, A23L 3/349

(54) **VEGETABLE PROTEIN PRODUCTION METHOD AND FLAVOUR-IMPROVEMENT METHOD**

(30) Priority: 26.03.2020 JP 2020055221
(71) Applicant: Fuji Oil Holdings Inc., Izumisano-shi, Osaka 598-8540 (JP)
(72) Inventor: IKENAGA, Naoya, Izumisano-shi, Osaka 598-8540 (JP)
(74) Representative: Dennemeyer & Associates S.A.
(86) International application number: PCT/JP2021/012164
(87) International publication number: WO 2021/193698

(57) **Abstract**

An objective of the present invention is to provide plant protein having a good flavor and no unfavorable flavor by a relatively simple method. The present invention has been accomplished by finding the knowledge that an unfavorable flavor derived from plant protein disappears, and a good flavor is obtained, by mixing a solution containing 0.1 to 30% by weight of plant protein with 0.5 to 15% by weight, relative to the plant protein, of ethanol, and heating the mixture for sterilization.

## Description

### TECHNICAL FIELD

The present invention relates to a method for producing plant protein having a good flavor and no unfavorable flavor.

### BACKGROUND ART

In an effort underway to seek a sustainable world, there is an increased social sense of crisis concerning such problems as "shortage of food resources" and "environment".

Among others, food (especially, animal protein sources) and water resources are predicted to run short because of world population growth.

On the other hand, as a countermeasure to the social issues of "shortage of food resources" and "environment," which are caused associated with the population growth, a solution through plant food raw materials is attempted.

Especially, soybean, pea, and others are considered as one of effective solutions to the human social issues.

This is because soybean, pea, and others can be cultivated in large amounts with minimal amounts of fertilizer and water, compared to animal protein sources, in a wide range of regions from cold climate areas to hot-arid areas.

However, "provision of deliciousness" is often considered important in the event that plant protein sources are widespread. For example, soybean protein is a good-quality protein containing no cholesterol and being low in global environmental load but has a distinctive flavor such as a green grass taste and a harsh taste. Therefore, use of soybean protein is limited in one sense.

For example, Patent Literature 1 proposes, as a method for improving the flavor and color tone of a soybean product, a method of bringing into contact with a culture of specific lactic acid bacteria.

Also, Patent Literature 2 proposes, as a soy protein product having a reduced off-flavor, a method of using supercritical carbon dioxide. However, both methods employ special substances such as a culture of specific lactic acid bacteria and supercritical carbon dioxide.

Also, Patent Literature 3 proposes a method for producing a soybean protein material having a good flavor, which includes immersing whole soybean or defatted soybean in 60 to 85 vol.% concentration aqueous alcohol solution for an alcohol treatment, adding water to residues (soybean curd refuse) obtained by extracting water from the resultant product to prepare an aqueous slurry, heating and fluidizing the slurry, and separately collecting a water-soluble portion. However, the amount of alcohol in which soybean protein is immersed is as large as several times or more the amount of soybean protein, and economical and environmental demerits, such as a solvent removal treatment, have been serious.

### CITATION LIST

### PATENT LITERATURES

Patent Literature 1: JP-A-6-276979
Patent Literature 2: JP-T-2008-543343
Patent Literature 3: JP-A-2001-95497

### SUMMARY OF THE INVENTION

### PROBLEMS TO BE SOLVED BY THE INVENTION

A subject of the present invention is to provide plant protein having a good flavor and no unfavorable flavor by a relatively simple method.

### SOLUTION TO THE PROBLEMS

The present inventor intensively conducted research concerning the above-described subject and has accomplished the present invention by finding the knowledge that an unfavorable flavor derived from plant protein disappears, and a good flavor is obtained, by mixing a solution containing 0.1 to 30% by weight of plant protein with 0.5 to 15% by weight, relative to the plant protein, of ethanol, and heating the mixture for sterilization.

That is, the present invention encompasses the following inventions.
(1) A method for producing plant protein, which includes mixing a solution containing 0.1 to 30% by weight of plant protein with 0.5 to 15% by weight, relative to the plant protein, of ethanol, and heating the mixture for sterilization.
(2) A method for improving a flavor of plant protein, which includes mixing a solution containing 0.1 to 30% by weight of plant protein with 0.5 to 15% by weight, relative to the plant protein, of ethanol, and heating the mixture for sterilization.
(3) Beverages and food products including the plant protein described in (1).

### EFFECTS OF THE INVENTION

The present invention can provide plant protein having a good flavor and no unfavorable flavor by a relatively simple method, and soybean, pea, and others may be one of effective solutions to such social issues as "shortage of food resources" and "environment".

### DESCRIPTION OF THE EMBODIMENTS

Hereinafter, the present invention will be specifically described.

### (Plant protein)

In the method of the present invention, the plant protein refers to protein derived from plant raw materials.

Examples of the plant raw materials include: burdock, beet, carrot, Japanese radish, turnip, sweet potato, cassava, dasheen, taro, lotus root, and potato, as root vegetables; asparagus and bamboo shoot, as stem vegetables; and cabbage, onion, spinach, and lettuce, as leaf vegetables. Further examples include fruit vegetables and flower vegetables. Examples of the fruit vegetables include: rice and corn as cereal crops; red bean, mung bean, common bean, pea, black-eyed pea, broad bean, soybean, chickpea, peanut, lentil, and almond, as legumes; and eggplant, tomatoes, bell pepper/paprika, squash, and cucumber, as other fruit vegetables. Examples of the flower vegetables include artichoke, oilseed rape, broccoli, and cauliflower.

Among the above-described plant raw materials, plant protein of legumes is preferably adopted in the present invention. More preferably, soybean protein, of which the raw material-derived flavor has been avoided, is suitable, among the plant protein of legumes, in the present invention.

### (Solution containing plant protein)

In the present invention, the solution containing plant protein can be, for example, soy milk containing soybean protein or a solution during the production process of plant protein, or can be prepared by dissolving powdered plant protein in water.

The prepared solution may have physical properties which exhibit a viscosity from low in a liquid state to some degree, depending on the content of plant protein and other formulated substances.

In the method of the present invention, plant protein in an amount of 0.1 to 30% by weight, preferably 1 to 25% by weight, and more preferably 3 to 22% by weight is contained in a solution. When the content of plant protein in the solution exceeds 30% by weight, the viscosity of the solution increases, which can complicate the subsequent heat sterilization process.

### (Ethanol)

The method of the present invention includes, mixing ethanol in the above-described solution containing plant protein and heating the mixture for sterilization. The ethanol usable in the present invention is not limited to ethyl alcohol. Examples include brewed alcohol, spirits (for example, spirit such as gin, vodka, rum, tequila, and new spirit, and alcohol for material), liqueurs, whiskeys (for example, whiskey and brandy), shochu (consecutively distilled shochu, so-called high-class shochu, and single distilled shochu, so-called second-class shochu), and brewed alcoholic beverages such as refined sake, wine, and beer. Of these ethanols, one or a combination of two or more can be used.

Also, the method of the present invention includes, mixing the above-described ethanol in an amount of 0.5 to 15 by weight relative to the plant protein, more preferably 1 to 8% by weight, and further preferably 2 to 5% by weight, thereby to further impart the flavor improvement effect of the present invention.

When the mixed amount of ethanol relative to the plant protein is less than 0.5% by weight, the effect of reducing an unfavorable flavor is unlikely to be obtained.

When the mixed amount of ethanol relative to the plant protein exceeds 15% by weight, not only an unfavorable flavor but also a favorable flavor derived from raw materials may decrease, and furthermore, the flavor of ethanol may remain even after heat sterilization.

### (Heat sterilization)

As heat sterilization, any common sterilization method can be performed.

Examples include a holder sterilization method at 63°C for 30 minutes, a plate heat exchanger sterilization method at 72 to 75°C for 15 seconds, a high temperature short time sterilization method (HTST method) at 82 to 85°C for 10 seconds, and an ultra high temperature sterilization method (UHT method) at 130 to 140°C for 2 seconds.

Also, examples of a direct heating sterilizer include UHT sterilizers such as an ultra high temperature sterilizer (manufactured by Iwai Kikai Kogyo Co., Ltd.), a uperization sterilizer (manufactured by Tetra Pak/Alfa-Laval Co., Ltd.), a VTIS sterilizer (manufactured by Tetra Pak/Alfa-Laval Co., Ltd.), a Lagea UHT sterilizer (manufactured by Lagea Co., Ltd.), and a Paralizator (manufactured by Pash and Silkeborg Co., Ltd.). Any of these sterilizers may be used.

The plant protein obtained by the method of the present invention has a good flavor, can be used in a liquid state as it is after heat sterilization, and can be applied in beverages or as a raw material of oil-in-water emulsions such as coffee cream and whipping cream.

Alternatively, the solution after heat sterilization can be dried and powdered to be used as powdered plant protein having a good flavor.

### EXAMPLES

Hereinafter, the present invention will be more specifically described by illustrating examples. It is noted that the values in examples are based on weight, unless otherwise stated.

### (Example 1)

While stirring by a homomixer, 12 parts of enzyme-treated soybean protein powder (manufactured by Fuji Oil Co., Ltd., protein content: 86.3%) was added to 86.8 parts of water to prepare a solution containing plant protein. Thereafter, 1.2 parts of Suntory brandy based liqueur VO (manufactured by Suntory Co., Ltd., ethanol content: 32.3%) was added. The mixture was sterilized by a direct heating method at 145°C for 4 seconds using an ultra high temperature sterilizer (manufactured by Iwai Kikai Kogyo Co., Ltd.).

### (Example 2)

Preparation was performed in a similar manner to Example 1, except that 9.5 parts of soybean protein powder (manufactured by Fuji Oil Co., Ltd., protein content: 86.3%) is added to 89.5 parts of water while stirring by a homomixer to prepare a solution containing plant protein, and thereafter 1.0 part of Suntory brandy based liqueur VO (manufactured by Suntory Co., Ltd., ethanol content: 32.3%) is added.

### (Example 3)

Preparation was performed in a similar manner to Example 1, except that 10.5 parts of powdered pea protein (manufactured by Roquette Freres, protein content: 79%) is added to 88.5 parts of water while stirring by a homomixer to prepare a solution containing plant protein, and thereafter 1.0 part of Suntory brandy based liqueur VO (manufactured by Suntory Co., Ltd., ethanol content: 32.3%) is added.

### (Example 4)

Preparation was performed in a similar manner to Example 1, except that 10.2 parts of powdered mung bean protein (manufactured by Fuji Plant Protein Labs, protein content: 80%) is added to 88.8 parts of water while stirring by a homomixer to prepare a solution containing plant protein, and thereafter 1.0 part of Suntory brandy based liqueur VO (manufactured by Suntory Co., Ltd., ethanol content: 32.3%) is added.

### (Example 5)

Preparation was performed in a similar manner to Example 1, except that 10.2 parts of powdered rice protein (manufactured by NutriBiotic, protein content: 80%) is added to 88.8 parts of water while stirring by a homomixer to prepare a solution containing plant protein, and thereafter 1.0 part of Suntory brandy based liqueur VO (manufactured by Suntory Co., Ltd., ethanol content: 32.3%) is added.

### (Example 6)

Preparation was performed in a similar manner to Example 1, except that 18.0 parts of powdered almond milk (manufactured by Tsukuba Dairy Products, Co., Ltd., protein content: 28.4%) is added to 81.4 parts of water while stirring by a homomixer to prepare a solution containing plant protein, and thereafter 0.6 part of Suntory brandy based liqueur VO (manufactured by Suntory Co., Ltd., ethanol content: 32.3%) is added.

### (Example 7)

Preparation was performed in a similar manner to Example 1, except that 12 parts of enzyme-treated powdered soybean protein (manufactured by Fuji Oil Co., Ltd., protein content: 86.3%) is added to 87.0 parts of water while stirring by a homomixer to prepare a solution containing plant protein, and thereafter 1.0 part of Suntory Rum Dark (manufactured by Suntory Co., Ltd., ethanol content: 38.3%) is added.

### (Example 8)

Preparation was performed in a similar manner to Example 1, except that 12 parts of enzyme-treated powdered soybean protein (manufactured by Fuji Oil Co., Ltd., protein content: 86.3%) is added to 87.6 parts of water while stirring by a homomixer to prepare a solution containing plant protein, and thereafter 0.4 part of ethanol (manufactured by FUJIFILM Wako Pure Chemical Corporation, ethanol content: 99.5%) is added.

### (Example 9)

Preparation was performed in a similar manner to Example 1, except that 12 parts of enzyme-treated powdered soybean protein (manufactured by Fuji Oil Co., Ltd., protein content: 86.3%) is added to 87.5 parts of water while stirring by a homomixer to prepare a solution containing plant protein, and thereafter 0.5 part of Suntory brandy based liqueur VO (manufactured by Suntory Co., Ltd., ethanol content: 32.3%) is added.

### (Example 10)

Preparation was performed in a similar manner to Example 1, except that 12 parts of enzyme-treated powdered soybean protein (manufactured by Fuji Oil Co., Ltd., protein content: 86.3%) is added to 87.8 parts of water while stirring by a homomixer to prepare a solution containing plant protein, and thereafter 0.2 part of Suntory brandy based liqueur VO (manufactured by Suntory Co., Ltd., ethanol content: 32.3%) is added.

### (Example 11)

Preparation was performed in a similar manner to Example 1, except that 12 parts of enzyme-treated powdered soybean protein (manufactured by Fuji Oil Co., Ltd., protein content: 86.3%) is added to 84.9 parts of water while stirring by a homomixer to prepare a solution containing plant protein, and thereafter 3.1 parts of Suntory brandy based liqueur VO (manufactured by Suntory Co., Ltd., ethanol content: 32.3%) is added.

### (Example 12)

Preparation was performed in a similar manner to Example 1, except that 8 parts of enzyme-treated powdered soybean protein (manufactured by Fuji Oil Co., Ltd., protein content: 86.3%) is added to 88.9 parts of water while stirring by a homomixer to prepare a solution containing plant protein, and thereafter 3.1 parts of Suntory brandy based liqueur VO (manufactured by Suntory Co., Ltd., ethanol content: 32.3%) is added.

### (Example 13)

Preparation was performed in a similar manner to Example 1, except that 22 parts of enzyme-treated powdered soybean protein (manufactured by Fuji Oil Co., Ltd., protein content: 86.3%) is added to 75.6 parts of water while stirring by a homomixer to prepare a solution containing plant protein, and thereafter 2.4 parts of Suntory brandy based liqueur VO (manufactured by Suntory Co., Ltd., ethanol content: 32.3%) is added.

### (Example 14)

Preparation was performed in a similar manner to Example 1, except that 26 parts of enzyme-treated powdered soybean protein (manufactured by Fuji Oil Co., Ltd., protein content: 86.3%) is added to 71.0 parts of water while stirring by a homomixer to prepare a solution containing plant protein, and thereafter 3.0 parts of Suntory brandy based liqueur VO (manufactured by Suntory Co., Ltd., ethanol content: 32.3%) is added.

### (Example 15)

Preparation was performed in a similar manner to Example 1, except that 12 parts of enzyme-treated powdered soybean protein (manufactured by Fuji Oil Co., Ltd., protein content: 86.3%) is added to 86.5 parts of water while stirring by a homomixer to prepare a solution containing plant protein, and thereafter 1.5 parts of ethanol (manufactured by FUJIFILM Wako Pure Chemical Corporation, ethanol content: 99.5%) is added.

### (Example 16)

Preparation was performed in a similar manner to Example 1, except that 34 parts of enzyme-treated powdered soybean protein (manufactured by Fuji Oil Co., Ltd., protein content: 86.3%) is added to 65.3 parts of water while stirring by a homomixer to prepare a solution containing plant protein, and thereafter 0.7 part of Suntory brandy based liqueur VO (manufactured by Suntory Co., Ltd., ethanol content: 32.3%) is added.

### (Comparative Example 1)

Preparation was performed in a similar manner to Example 1, except that 22 parts of enzyme-treated powdered soybean protein (manufactured by Fuji Oil Co., Ltd., protein content: 86.3%) is added to 77.8 parts of water while stirring by a homomixer to prepare a solution containing plant protein, and thereafter 0.2 part of Suntory brandy based liqueur VO (manufactured by Suntory Co., Ltd., ethanol content: 32.3%) is added.

### (Comparative Example 2)

Preparation was performed in a similar manner to Example 1, except that 7 parts of enzyme-treated powdered soybean protein (manufactured by Fuji Oil Co., Ltd., protein content: 86.3%) is added to 89.4 parts of water while stirring by a homomixer to prepare a solution containing plant protein, and thereafter 3.6 parts of Suntory brandy based liqueur VO (manufactured by Suntory Co., Ltd., ethanol content: 32.3%) is added.

### (Comparative Example 3)

Preparation was performed in a similar manner to Example 1, except that 7 parts of enzyme-treated powdered soybean protein (manufactured by Fuji Oil Co., Ltd., protein content: 86.3%) is added to 89.6 parts of water while stirring by a homomixer to prepare a solution containing plant protein, and thereafter 3.4 parts of Suntory Rum Dark (manufactured by Suntory Co., Ltd., ethanol content: 38.3%) is added.

### (Comparative Example 4)

Preparation was performed in a similar manner to Example 1, except that 12 parts of enzyme-treated powdered soybean protein (manufactured by Fuji Oil Co., Ltd., protein content: 86.3%) is added to 86 parts of water while stirring by a homomixer to prepare a solution containing plant protein, and thereafter 2 parts of ethanol (manufactured by FUJIFILM Wako Pure Chemical Corporation, ethanol content: 99.5%) is added.

In a sensory test, a rating was determined through evaluation based on the below-described five levels, and an average point by 15 trained panelists was defined as an evaluation point.

Flavor of protein: if an unpleasant taste of plant protein is sensed (not sensed 5 to 1 sensed)

Flavor of the entirety: if a flavor of an ethanol-containing raw material remains (not remain 5 to 1 remains)

The results of Examples 1 to 16 and Comparative Examples 1 to 4 are indicated in <Table 1> and <Table 2>.

| <Table 1> | Example 1 | Example 2 | Example 3 | Example 4 | Example 5 | Example 6 | Example 7 | Example 8 | Example 9 | Example 10 |
|---|---|---|---|---|---|---|---|---|---|---|
| Enzyme-treated powdered soybean protein | 12.0 | | | | | | 12.0 | 12.0 | 12.0 | 12.0 |
| Powdered soybean protein | | 9.5 | | | | | | | | |
| Powdered pea protein | | | 10.5 | | | | | | | |
| Powdered mung bean protein | | | | 10.2 | | | | | | |
| Rice protein | | | | | 10.2 | | | | | |
| Almond protein | | | | | | 18.0 | | | | |
| Brandy based liqueur VO | 1.2 | 1.0 | 1.0 | 1.0 | 1.0 | 0.6 | | | 0.5 | 0.2 |
| Rum Dark | | | | | | | 1.0 | | | |
| Ethanol | | | | | | | | 0.4 | | |
| Water | 86.8 | 89.5 | 88.5 | 88.8 | 88.8 | 81.4 | 87.0 | 87.6 | 87.5 | 87.8 |
| | | | | | | | | | | |
| Plant protein | 10.4 | 8.2 | 8.3 | 8.2 | 8.2 | 5.1 | 10.4 | 10.4 | 10.4 | 10.4 |
| Ethanol | 0.4 | 0.3 | 0.3 | 0.3 | 0.3 | 0.2 | 0.4 | 0.4 | 0.2 | 0.1 |
| Ethanol/plant protein | 3.7 | 3.9 | 3.9 | 4.0 | 4.0 | 3.8 | 3.7 | 3.8 | 1.6 | 0.6 |
| If unpleasant taste of plant protein is sensed (1 to 5, 5: good) | 5 | 5 | 5 | 5 | 5 | 5 | 5 | 5 | 5 | 4 |
| If flavor of ethanol-containing raw materials remains (1 to 5, 5: good) | 5 | 5 | 5 | 5 | 5 | 5 | 4 | 5 | 5 | 5 |

| <Table 2> | Example 11 | Example 12 | Example 13 | Example 14 | Example 15 | Example 16 | Comparative Example 1 | Comparative Example 2 | Comparative Example 3 | Comparative Example 4 |
|---|---|---|---|---|---|---|---|---|---|---|
| Enzyme-treated powdered soybean protein | 12.0 | 8.0 | 22.0 | 26.0 | 12.0 | 34.0 | 22.0 | 7.0 | 7.0 | 12.0 |
| Brandy based liqueur VO | 3.1 | 3.1 | 2.4 | 3.0 | | 0.7 | 0.2 | 3.6 | | |
| Rum Dark | | | | | | | | | 3.4 | |
| Ethanol | | | | | 1.5 | | | | | 2.0 |
| Water | 84.9 | 88.9 | 75.6 | 71.0 | 86.5 | 65.3 | 77.8 | 89.4 | 89.6 | 86.0 |
| | | | | | | | | | | |
| Plant protein | 10.4 | 6.9 | 19.0 | 22.4 | 10.4 | 29.3 | 19.0 | 6.0 | 6.0 | 10.4 |
| Ethanol | 1.0 | 1.0 | 0.8 | 1.0 | 1.5 | 0.2 | 0.1 | 1.2 | 1.3 | 2.0 |
| Ethanol/plant protein | 9.7 | 14.5 | 4.1 | 4.3 | 14.4 | 0.8 | 0.3 | 19.2 | 21.6 | 19.2 |
| If unpleasant taste of plant protein is sensed (1 to 5, 5: good) | 5 | 5 | 4 | 4 | 4 | 4 | 3 | 5 | 5 | 5 |
| If flavor of ethanol-containing raw materials remains (1 to 5, 5: good) | 4 | 4 | 4 | 4 | 4 | 5 | 5 | 3 | 2 | 3 |

## Claims

1. A method for producing plant protein, comprising mixing a solution containing 0.1 to 30% by weight of plant protein with 0.5 to 15% by weight, relative to the plant protein, of ethanol, and heating the mixture for sterilization.

2. A method for improving a flavor of plant protein, comprising mixing a solution containing 0.1 to 30% by weight of plant protein with 0.5 to 15% by weight, relative to the plant protein, of ethanol, and heating the mixture for sterilization.

3. Beverages and food products containing the plant protein according to claim 1.
